Europäisches Patentamt

European Patent Office

Office européen des brevets

(19)

(11) **EP 1 414 684 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(21) Anmeldenummer: **02772107.5**

(22) Anmeldetag: **26.07.2002**

(51) Int Cl.:
*B60T 8/32* *(2006.01)*          *B60T 8/34* *(2006.01)*
*B60T 8/00* *(2006.01)*          *B60T 13/68* *(2006.01)*

(86) Internationale Anmeldenummer:
**PCT/EP2002/008371**

(87) Internationale Veröffentlichungsnummer:
**WO 2003/011664 (13.02.2003 Gazette 2003/07)**

(54) **BREMSANLAGE FÜR NUTZFAHRZEUGANHÄNGER**

BRAKING SYSTEM FOR TRAILERS OF UTILITY VEHICLES

SYSTEME DE FREINAGE POUR REMORQUES DE VEHICULES UTILITAIRES

(84) Benannte Vertragsstaaten:
**AT BE BG CH CY CZ DE DK EE ES FI FR GB GR IE IT LI LU MC NL PT SE SK TR**

(30) Priorität: **30.07.2001 DE 10137148**

(43) Veröffentlichungstag der Anmeldung:
**06.05.2004 Patentblatt 2004/19**

(73) Patentinhaber: **KNORR-BREMSE SYSTEME FÜR NUTZFAHRZEUGE GMBH
80809 München (DE)**

(72) Erfinder:
• **MEDERER, Martin
  92318 Neumarkt (DE)**
• **FRIES, Ansgar
  80993 München (DE)**
• **SZABO , Gergely
  H-1125 Budapest (HU)**
• **FRY, Matthew
  Bristol,
   (GB)**

(56) Entgegenhaltungen:
**EP-A- 0 586 203          EP-A- 0 754 609
US-A- 5 277 485          US-A- 6 079 790**

**Beschreibung**

Die vorliegende Erfindung betrifft eine Bremsanlage für Nutzfahrzeuganhänger gemäß den Merkmalen des Patentanspruches 1.

Aus der DE 38 29 951 C2 ist eine Nutzfahrzeugbremsanlage zur lastabhängigen Bremsdruckregelung bekannt, bei der jedem der Bremszylinder der vier Fahrzeugräder ein einem herkömmlichen ABS-Ventil entsprechendes Magnetventil sowie ein Raddrehzahlsensor zugeordnet sind. Die Magnetventile und die Raddrehzahlsensoren sind mit einem Zentralsteuergerät verbunden, das die Magnetventile bei Bremsungen in Abhängigkeit von der Achslastverteilung ansteuert. Bei dieser Vorrichtung wird für die achslastabhängige Bremsdruckregelung auf die Ermittlung der absoluten Radschlüpfe völlig verzichtet. Vielmehr wird für die Auswertung der Raddrehzahlsignale jeweils die Überschreitung einer eher groben zwischenachsigen "Raddrehzahldifferenzschwelle" als Kriterium für die Bremsdruckbegrenzung verwendet.

Aus der DE 44 43 522 A1 ist ein Verfahren zur Bestimmung der Fahrbahnneigung bekannt, bei dem für einen angetriebenen Fahrzustand und.einen frei rollenden Fahrzustand jeweils eine Raddrehzahldifferenz einer angetriebenen Achse und einer nicht angetriebenen Achse und aus diesen Differenzen eine Neigungskonstante ermittelt wird.

Aus der DE 198 09 546 C1 ist ein Verfahren zum automatischen Bestimmen des Radstandes von lenkbaren Fahrzeugen während Kurvenfahrten bekannt, wobei der Radstand aus einer vorgegebenen Spurweite und gemessenen Radumfangsgeschwindigkeiten ermittelt wird.

Dokument US 6 079 790 A offenbart eine Bremsanlage gemäß dem Oberbegriff von Anspruch 1.

Aus anmelderinternem Stand der Technik ist ein elektronisches Bremssystem für Nutzfahrzeuganhänger bekannt, bei dem den Bremsen der Vorderachse und den Bremsen der Hinterachse jeweils ein aktives Druckregelmodul zugeordnet ist. Diese Druckregelmodule weisen jeweils drei Magnetventile auf, nämlich zum Be- und Entlüften sowie für einen "Back-up-Kreis", sowie einen Drucksensor. Die Ansteuerung des Druckregelmoduls der Vorderachse erfolgt über das Druckregelmodul der Hinterachse, was zu einem hohen Verdrahtungsaufwand führt. Hierzu sind nämlich drei Steuerleitungen und eine Masseleitung für die Magnetventile sowie eine Sensorleitung und eine Masseleitung für den Drucksensor erforderlich.

Aufgabe der vorliegenden Erfindung ist es, eine Bremsanlage für Nutzfahrzeuganhänger zu schaffen, die kostengünstig ist und einen geringeren Bauaufwand erfordert.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht darin, die Bremsen der Vorderachse des Nutzfahrzeuganhängers durch ein einziges, gemeinsames ABS-Ventil anzusteuern, das beiden Vorderachsbremsen zugeordnet ist und das von einer primär den Hinterachsbremsen zugeordneten Bremselektronik, d.h. von einem EBS-Modul angesteuert wird, und zwar in Abhängigkeit von einem sog. "Differenzschlupf" zwischen der Vorderachse und der Hinterachse.

Vereinfacht ausgedrückt erfolgt die Bremsdruckregelung der Hinterachsbremsen durch ein Druckregelmodul, welches das den beiden Vorderachsbremsen zugeordnete ABS-Ventil elektrisch ansteuert.

Das ABS-Relaisventil besteht nur aus zwei Magnetventilen zum Halten bzw. Entlüften von Bremsdruck. Ein Drucksensor für die Vorderachsbremsen ist hier nicht erforderlich. Es ist auch kein Back-up-Ventil vorgesehen. Für die Verbindung des Druckregelmoduls mit dem ABS-Ventil werden somit nur drei Verbindungsleitungen benötigt.

Da gemäß der Erfindung an der Vorderachse kein Drucksensor vorgesehen ist, ist die Druckregelung an den Vorderachsbremsen zwar nicht ganz so exakt möglich, wie mit einem Drucksensor. Das "Fehlen" eines Drucksensors an der Vorderachse kann aber durch einen sog. "Differenzschlupfregelalgorithmus" weitgehend ausgeglichen werden, da die Radgeschwindigkeiten gemessen und hieraus Radschlüpfe an den Rädern der beiden Achsen ermittelt werden, was eine "Aussage" über die momentane Bremskraftverteilung ermöglicht.

Die Bremsdruckregelung an der Vorderachse erfolgt also in Abhängigkeit von den von Raddrehzahlsensoren gelieferten Raddrehzahlsignalen und eines hieraus abgeleiteten "Differenzschlupfsignales" zwischen Vorderachse und Hinterachse.

Das Ziel der Regelung besteht darin, den Vorderachsbremsdruck so zu regeln, daß der bei einer Bremsung an den Vorderrädern und den Hinterrädern auftretende Schlupf gleich ist bzw. daß die Differenz zwischen einem "Schlupfsignal" der Vorderachse und der Hinterachse in einem vorgegebenen Wertebereich gehalten wird.

Auf diese Weise wird eine annähernd gleichmäßige Verzögerung beider Achsen bzw. ein gleichmäßiges Verzögerungsverhältnis sichergestellt. Hierzu wird der Vorderachsbremsdruck entsprechend moduliert, d.h. der über die pneumatische Steuerleitung vorgegebene Bremsdruck wird ggf. reduziert. Der über die pneumatische Steuerleitung vorgegebene Bremsdruck entspricht nämlich dem maximal über das ABS-Ventil den Vorderachsbremszylindern einsteuerbaren Bremsdruck.

Im folgenden wird die Erfindung anhand eines Ausführungsbeispieles im Zusammenhang mit der Zeichnung näher erläutert. Es zeigen:

Fig. 1    eine Bremsanlage gemäß der Erfindung in schematischer Darstellung; und

Fig. 2     eine schematische Darstellung kinematischer Zusammenhänge des Anhängerfahrzeugs bei einer Kurvenfahrt.

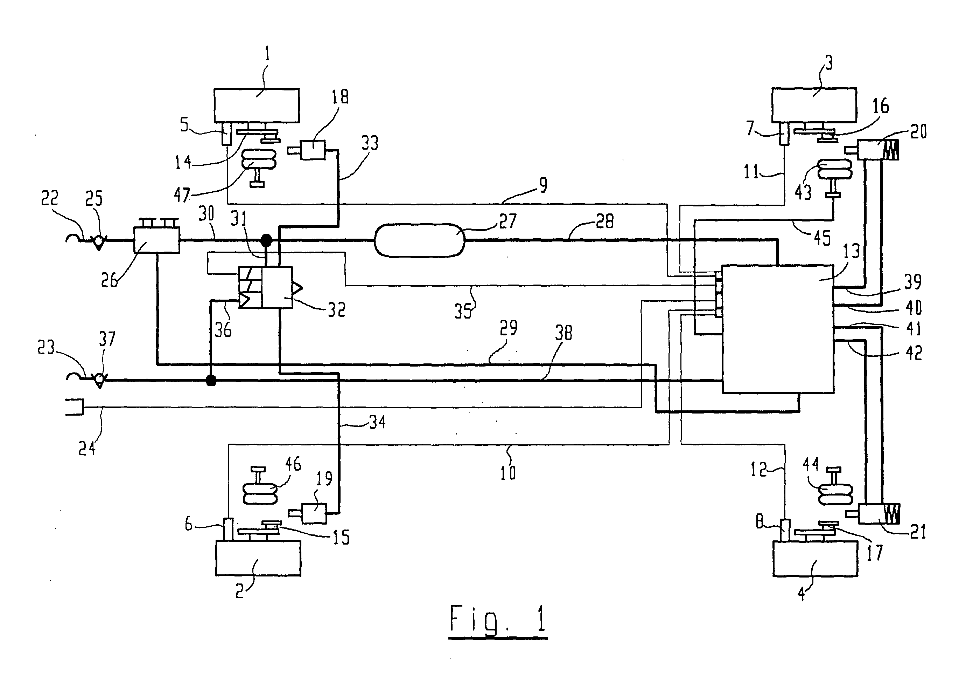

Fig. 1 zeigt eine schematische Darstellung der Bremsanlage eines Nutzfahrzeuganhängers.

Der Nutzfahrzeuganhänger weist eine lenkbare Vorderachse mit Vorderrädern 1, 2 und eine Hinterachse mit Hinterrädern 3, 4 auf. Den Vorderrädern 1, 2 und den Hinterrädern 3, 4 sind jeweils ein Raddrehzahlsensor 5-8 zugeordnet, die über elektrische Leitungen 9-12 mit einem elektropneumatischen Bremsdruckregelmodul 13 (EBS-Modul) verbunden sind, das primär den Hinterachsbremsen zugeordnet ist. Den Vorderrädern 1, 2 und den Hinterrädern 3, 4 sind jeweils eine Bremse 14-17 zugeordnet, die mittels Bremszylindern 18, 19 der Vorderachse bzw. Federspeicherbremszylindern 20, 21 der Hinterachse betätigbar sind.

Die Bremsanlage des Anhängerfahrzeuges ist über drei Anschlüsse, nämlich einen pneumatischen Versorgungsleitungsanschluß 22, einen pneumatischen Steuerleitungsanschluß 23 und einen elektrischen Steueranschluß 24, mit der Bremsanlage eines Zugfahrzeuges verbindbar.

Der Versorgungsleitungsanschluß 22 ist über ein Rückschlagventil 25 und ein Parkventil 26 mit einem Druckluftspeicher 27 verbunden. Vom Druckluftspeicher 27 führt eine pneumatische Leitung 28 zu einem Versorgungseingang des Druckregelmoduls 13. Ferner zweigt vom Parkventil 26 eine pneumatische Leitung 29 zum Druckregelmodul 13 ab. Eine zwischen dem Parkventil 26 und dem Druckluftspeicher 27 verlaufende pneumatische Leitung 30 ist mit einem Versorgungseingang 31 eines ABS-Ventils 32 verbunden.

Das ABS-Ventil 32 ist beiden Bremszylindern 18, 19 der Vorderachse gemeinsam zugeordnet und mit dem Bremszylinder 18 über eine pneumatische Leitung 33 und mit dem Bremszylinder 19 über eine pneumatische Leitung 34 verbunden. Das ABS-Ventil 32 weist zwei elektrische Steuereingänge auf, die über "eine" hier nur schematisch dargestellte elektrische Leitung 35 mit dem Druckregelmodul 13 verbunden sind.

Des weiteren weist das ABS-Ventil 32 einen pneumatischen Steuereingang 36 auf, der über ein Rückschlagventil 37 mit dem pneumatischen Steueranschluß 23 verbunden ist. Der pneumatische Steuereingang 36 ist ferner über eine pneumatische Steuerleitung 38 mit einem pneumatischen Steuereingang des Druckregelmoduls 13 verbunden. Das Druckregelmodul 13 weist einen integrierten Drucksensor (nicht dargestellt) auf, der den Druck in der pneumatischen Steuerleitung 38, d.h. den am pneumatischen Steuereingang 36 des ABS-Ventils anliegenden Steuerdruck mißt, welcher gleich dem Maximaldruck ist, der den Bremszylindern 18, 19 einsteuerbar ist.

Das Druckregelmodul 13 weist pneumatische Ausgänge 39-42 auf, die über zugeordnete pneumatische Leitungen mit den Federspeicherbremszylindern 20 bzw. 21 verbunden sind.

An der Hinterachse sind ferner pneumatische Achslastsensoren bzw. Federbälge 43, 44 vorgesehen, die eine Ermittlung der Achslast, insbesondere der dynamischen Achslast beim Bremsen und Anfahren ermöglichen. Die Achslastsensoren 43, 44 sind über elektrische Leitungen mit dem Druckregelmodul 13 verbunden, was hier nur exemplarisch anhand der elektrischen Leitung 45 dargestellt ist. Entsprechende Achslastsensoren 47, 46 können an der Vorderachse vorgesehen sein, was aber nicht zwingend erforderlich ist.

Bei einem Bremsvorgang gibt der Fahrer über das Bremspedal und die pneumatische Steuerleitung 23 sowie die elektrische Steuerleitung 24 ein Bremsanforderungssignal vor. Entsprechend der Bremsanforderung des Fahrers steuert das Druckregelmodul 13 in Abhängigkeit von der momentanen Achslastverteilung Bremsdrücke in die Federspeicherbremszylinder 20, 21 ein. Über die Raddrehzahlsensoren 8, 9 wird das Raddrehzahlverhalten der Hinterräder 3, 4 überwacht und bei einer Blockiergefahr der Hinterachsbremsdruck ggf. begrenzt.

Gleichzeitig steuert das Druckregelmodul 13 das ABS-Ventil 32 über die elektrische Leitung 35 an, und zwar in Abhängigkeit von dem in die Federspeicherbremszylinder 20, 21 eingesteuerten Hinterachsbremsdruck und dem "Raddrehzahlverhalten" des Gesamtfahrzeuges, das über die Raddrehzahlsensoren 5-8 ständig überwacht wird. Aus den von den Raddrehzahlsensoren 5-8 gelieferten Raddrehzahlsignalen ermittelt das Druckregelmodul 13 ein "Differenzschlupfsignal", das über einen ggf. vorhandenen "Schlupfunterschied" an den Rädern 1, 2 bzw. 3, 4 der Vorder- und Hinterachse Auskunft gibt.

Das Druckregelmodul 13 steuert während eines Bremsvorgangs das ABS-Ventil 32 so an, daß sich an der Vorderachse und an der Hinterachse ein annähernd gleicher Radschlupf einstellt bzw. daß die Schlupfdifferenz zwischen Vorder- und Hinterachse in einem vorgegebenen Wertebereich liegt.

Vereinfacht ausgedrückt wird den Bremszylindern 18, 19 ein Vorderachsbremsdruck durch das ABS-Ventil 32 eingesteuert, und zwar in Abhängigkeit von der vom Fahrer vorgegebenen Bremsanforderung sowie der Hinterachsbelastung. Ergänzend dazu kann über die Achslastsensoren 47, 46 die Vorderachsbelastung gemessen und in die Ansteuerung des ABS-Ventils 32 bzw. in die Bremsdrucksteuerung der Vorderachse einbezogen werden.

Die Differenzschlupfregelung gemäß der Erfindung besteht im wesentlichen aus folgenden drei Hauptkomponenten:

1. Schätzung bzw. Berechnung des aktuellen Bremsdruckes an der Vorderachse.
2. Ermittlung des Differenzschlupfes zwischen Vorderachse und Hinterachse unter Berücksichtigung einer eventuellen Kurvenfahrt.

3. Steuerung bzw. Regelung des Differenzschlupfes.

Schätzung des Vorderachsbremsdruckes

Es wurde bereits erwähnt, daß an der Vorderachse kein Drucksensor vorgesehen ist. Der Bremsdruck an der Vorderachse wird also nicht exakt gemessen, sondern näherungsweise geschätzt, d.h. berechnet.

Am ABS-Ventil 32 liegt über dem pneumatischen Steuereingang 36 der Steuerdruck an. Dieser Steuerdruck ist bekannt, da er durch einen Drucksensor (nicht dargestellt) im Druckregelmodul 13 gemessen wird. Der Druckbereich, in dem der geschätzte Ausgangsdruck des ABS-Ventils 32, d.h. der Bremsdruck der Vorderachse liegen kann, ist zwischen Null und dem in den Leitungen 36, 38 herrschenden Steuerdruck, der im Druckregelmodul 13 gemessen wird.

Der tatsächlich eingesteuerte Vorderachsdruck wird näherungsweise durch zeitliche Integration errechnet, und zwar aus der vom Druckregelmodul 13 über die elektrische Leitung 35 vorgegebenen "Ansteuercharakteristik" des ABS-Ventils 32, d.h. der Anzahl und der Zeitdauer der "Öffnungs- und Schließtakte" des ABS-Ventils 32 und dem momentan vorhandenen Steuer- und Versorgungsdruck, wobei der Versorgungsdruck beispielsweise 8 bar ist.

Das Druckregelmodul 13 versorgt also die Bremszylinder 18, 19 über das ABS-Ventil 32 mit einem "gewünschten" Vorderachsbremsdruck. Für die Druckschätzung wird eine "Variable" verwendet, welche den Schätzbereich spezifiziert, wobei "normalerweise" der über die pneumatische Steuerleitung 23 vorgegebene Steuerdruck, der gleich dem momentanen maximal einsteuerbaren Vorderachsbremsdruck "P_MAX" ist, als Bereichsargument verwendet wird. Wenn jedoch das Vorderachsventil einer 4S3M-Anordnung (Bremsanlage mit vier Sensoren und drei Bremsdrucksteuerventilen) betrachtet wird und das EBS aktiv ist und der angeforderte Bremsdruck höher als ein Schwellwert des Druckregelmoduls ist, dann gilt folgendes:

- der angeforderte Bremsdruck soll als Bereichsgrenze für die Schätzung verwendet werden,
- der gewünschte Vorderachsbremsdruck soll als "Bereichsgrenze" für das ABS verwendet werden,
- das Minimum aus dem gewünschten Vorderachsbremsdruck und dem gewünschten ABS-Bremsdruck soll als gewünschter Druck für die Schätzung verwendet werden.

Ermittlung des Differenzschlupfes

Mit der Differenzschlupfberechnung werden folgende Daten für eine Weiterverarbeitung durch einen "Differenzschlupfregler" erhalten:

1. ein Signal, das anzeigt, daß das Radstand-Spurverhältnis des Fahrzeuges (wheelbase-track-ratio) "gelernt" wurde;
2. das momentane "Kurvenverhältnis" (cornering ratio);
3. der durchmesser- und kurvenverhältnisbereinigte Differenzschlupf (differential slip).

Das Radstand-Spurverhältnis des Nutzfahrzeuganhängers mit lenkbarer Vorderachse kann aus den Radgeschwindigkeiten "gelernt" bzw. berechnet werden, wenn bestimmte Bedingungen erfüllt sind. Das Signal, das anzeigt, daß das Radstand-Schlupfverhältnis gelernt wurde, wird dann erzeugt, wenn das Radstand-Spurverhältnis seit dem Einschalten (power on) mindestens einmal gelernt worden ist.

Das Radstand-Spurverhältnis kann in einem EEPROM gespeichert werden. In diesem Fall wird das o.g. Signal dann erzeugt, wenn das Radstand-Spurverhältnis seit der Installierung des EBS-Systems des Anhängerfahrzeuges mindestes einmal gelernt worden ist. Das Signal soll nur dann gelöscht werden, wenn ein Radstand-Spurverhältnis gelernt worden ist, das sich wesentlich von dem im EEPROM gespeicherten Wert unterscheidet. Dies kann darauf hindeuten, daß das EBS-Modul des Anhängerfahrzeuges in ein anderes Fahrzeug eingebaut wurde.

Wenn das Signal erzeugt ist, soll sich der "Schlupfregler" selbst in engen Kurven auf den kurvenkompensierten Differenzschlupfwert verlassen.

Das Signal soll während eines ABS-Eingriffes und zusätzlich 0,5 s danach gesetzt werden.

Kurvenverhältnis

Das Kurvenverhältnis (cornering ratio) gibt Auskunft darüber, wie eng die Kurve ist, die das Fahrzeug gerade fährt. Das Kurvenverhältnis ist hier das betragsmäßige Verhältnis aus der Differenz der beiden Hinterradgeschwindigkeiten des Fahrzeuges und der "mittleren" Hinterachsgeschwindigkeit. Es wird in Prozent angegeben und ist ein nichtnegativer Wert (Betrag). Das Kurvenverhältnis braucht nämlich nicht darüber Auskunft zu geben, ob das Fahrzeug gerade eine Linkskurve oder eine Rechtskurve fährt.

Differenzschlupf

Der Differenzschlupf (differential slip) ist "raddurchmesser- und kurvenkompensiert". Das heißt, daß bei der Überwachung, ob zwischen der Vorderachse und der Hinterachse eine "Schlupfdifferenz" vorliegt, die Raddurchmesser des Fahrzeugs sowie das Kurvenverhältnis berücksichtigt werden müssen, insbesondere ob das Fahrzeug momentan eine Kurve fährt oder ob es geradeaus fährt. Bei einem Anhängerfahrzeug mit lenkbarer Vorderachse sind nämlich bei einer Kurvenfahrt die Vorderradgeschwindigkeiten per se größer als die Geschwindigkeiten der Hinterräder. Die Schlupfdifferenz kann also nicht durch eine "einfache" Radgeschwindigkeitsdifferenzbildung zwischen Vorder- und Hinterachse ermittelt werden. Würde man bei der Differenzschlupfermittlung das momentane Kurvenverhältnis unberücksichtigt lassen, also nicht zwischen Kurvenfahrt und Geradeausfahrt unterscheiden, so entstünden zwangsläufig Fehler.

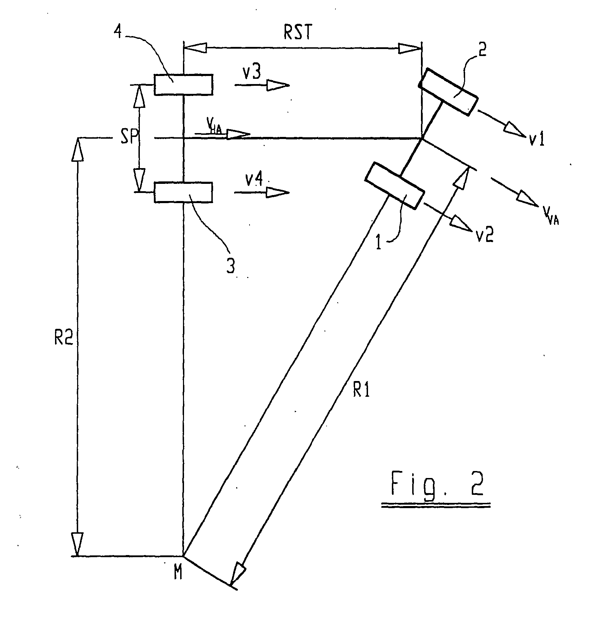

Die kinematischen Zusammenhänge bei einem Anhängerfahrzeug mit lenkbarer Vorderachse werden im Zusammenhang mit Fig. 2 näher erläutert. Hierbei werden folgende Variablen verwendet:

| | |
|---|---|
| Geschwindigkeiten der Vorderräder | $v1, v2$ |
| Geschwindigkeiten der Hinterräder | $v3, v4$ |
| mittlere Vorderachsgeschwindigkeit | $v_{VA}$ |
| mittlere Hinterachsgeschwindigkeit | $v_{HA}$ |
| Geschwindigkeitsdifferenz der Hinterräder | $\Delta v_{HA}$ |
| Referenzgeschwindigkeit der Vorderachse | $v_{VA, Ref}$ |
| Radstand | RST |
| Spurweite | SP |
| Radstand-Spur-Verhältnis | $\Phi$ |
| Gierrate des Anhängerfahrzeugs | $d\Omega/dt$ |
| mittlerer Kurvenradius der Vorderachse bezogen auf den Momentanpol M | R1 |
| mittlerer Kurvenradius der Hinterachse bezogen auf den Momentanpol M | R2. |

Fig. 2 zeigt schematisch ein Anhängerfahrzeug mit einer lenkbaren Vorderachse mit Vorderrädern 1, 2 und Hinterrädern 3, 4 bei einer Kurvenfahrt. Mit den in Fig. 1 gezeigten Raddrehzahlsensoren 5, 6 werden die Radumfangsgeschwindigkeiten v1, v2 der Vorderräder 1, 2 gemessen. Dementsprechend werden mit den Raddrehzahlsensoren 7, 8 die Raddrehzahlen bzw. unter Berücksichtigung der Raddurchmesser die Radumfangsgeschwindigkeiten v3, v4 der Hinterräder 3, 4 gemessen. Aus den Radumfangsgeschwindigkeiten v1, v2 kann eine "mittlere" Vorderachsgeschwingkeit $v_{VA}$ ermittelt werden:

$$v_{VA} = \frac{v1 + v2}{2} .$$

Dementsprechend wird eine mittlere Hinterachsgeschwindigkeit $v_{HA}$ ermittelt:

$$v_{HA} = \frac{v3 + v4}{2} .$$

Der Differenzschlupf $\Delta s$ zwischen Vorder- und Hinterachse kann folgendermaßen definiert werden:

$$\Delta s = \frac{v_{VA} - v_{HA}}{v_{HA}} \qquad [0,1\ \%].$$

Ermittlung des Radstand-Spurverhältnisses

Der Radstand kann unter Verwendung des Satzes des Pythagoras aus der mittleren Vorderachsgeschwindigkeit und der mittleren Hinterachsgeschwindigkeit berechnet werden.

Der Radstand des Anhängerfahrzeuges ist demnach:

$$RST = \sqrt{R_1^2 - R_2^2}$$

Multipliziert man die beiden mittleren Kurvenradien jeweils mit der Gierrate des Fahrzeuges, so ergeben sich die "Tangentialgeschwindigkeiten" an den Achsmittelpunkten, d.h. die mittlere Vorderachsgeschwindigkeit $v_{VA}$ und die mittlere Hinterachsgeschwindigkeit $v_{HA}$:

$$v_{VA} = d\Omega/dt \cong R1;$$

$$v_{HA} = d\Omega/dt \cong R2.$$

Die Differenzgeschwindigkeit an der Hinterachse, d.h. der Geschwindigkeitsunterschied zwischen dem rechten Hinterachsrad 3 und dem linken Hinterachsrad 4 ist:

$$\Delta v_{HA} = d\Omega/dt \cong SP.$$

Das Radstand-Spurverhältnis $\Phi$ kann folgendermaßer berechnet werden:

$$\phi = \frac{RST}{SP} = \frac{\sqrt{R_1^2 - R_2^2}}{SP}$$

Erweitert man mit $d\Omega/dt$, so ergibt sich:

$$\phi = \frac{\sqrt{(d\Omega/dt \bullet R1)^2 - (d\Omega/dt \bullet R2)^2}}{d\Omega/dt \bullet SP} = \frac{\sqrt{v_{VA}^2 - v_{HA}^2}}{\Delta v_{HA}}$$

Das Radstand-Spurverhältnis kann also aus den Radgeschwindigkeiten berechnet werden.

Diese Gleichung gilt aber nur dann, wenn folgende Randbedingungen erfüllt sind:

a) kein Längsschlupf an den Rädern bzw. keine Bremsung;
b) kein seitlicher Schlupf an den Rädern, d.h. keine wesentliche seitliche Beschleunigung;
c) die Radgeschwindigkeiten sind durch Raddurchmesserkalibrierung korrigiert;
d) die Radgeschwindigkeitswerte nicht zu klein sind zur Erzielung einer hinreichenden Genauigkeit;
e) für eine hinreichende Genauigkeit liegt ein signifikantes Kurvenverhältnis vor.

Die Lateralbeschleunigung, d.h. die seitliche Beschleunigung kann aus den Geschwindigkeiten und dem Kurvenverhältnis ermittelt werden. Der Lernvorgang für das Radstand-Spurverhältnis sollte auf einer Meßdauer von durchschnittlich einer Sekunde beruhen, während der die o.g. Bedingungen kontinuierlich erfüllt sind.

Wenn der Lernvorgang mindestens einmal nach dem Einschalten (power on) durchgeführt worden ist, sollte das den Lernvorgang anzeigende Signal gesetzt werden. Bis dahin sollte ein vorgegebener Wert (default value) für das Radstand-Spurverhältnis verwendet werden. Beispielsweise kann als "Anfangswert" für das Radstand-Spurverhältnis $\Phi = 2{,}5$ gegeben sein.

Berechnung des Differenzschlupfes zwischen Vorderachse und Hinterachse

Der Berechnung könnte die o.g. Formel

$$\Delta s \approx \frac{v_{VA} - v_{HA}}{v_{HA}}$$

zugrundegelegt werden. Bei dieser Formel ist die mittlere Hinterachsgeschwindigkeit $v_{HA}$ die Referenzgeschwindigkeit (Nenner).

Anstatt der mittleren Hinterachsgeschwindigkeit $v_{HA}$ sollte jedoch in der Praxis eine "Vorderachsreferenzgeschwindigkeit" im Nenner verwendet werden, die aus der mittleren Hinterachsgeschwindigkeit $v_{HA}$, dem Kurvenverhältnis und dem Radstand-Spurverhältnis errechnet wird.

Aus Fig. 2 ergibt sich, daß unter Verwendung des Satzes des Pythagoras die Vorderachsreferenzgeschwindigkeit $v_{VA,Ref}$ folgendermaßer berechnet werden kann:

$$v_{VA,Ref} = \sqrt{v_{HA}{}^2 + (d\Omega/dt \bullet RST)^2}$$

$$v_{VA,Ref} = \sqrt{v_{HA}{}^2 + (d\Omega/dt \bullet SP \bullet \phi)^2}$$

Mit $\Delta v_{HA} = d\Omega/dt \cong SP$ ergibt sich:

$$v_{VA,Ref} = \sqrt{v_{HA}{}^2 + (\Delta v_{HA} \bullet \phi)^2}$$

Somit lautet die Formel zur Berechnung des Differenzschlupfes $\Delta s$ wie folgt:

$$\Delta s = \frac{v_{VA} - v_{VA,\,Ref}}{v_{VA,\,Ref}} = \frac{v_{VA}}{v_{VA,\,Ref}} - 1 \qquad [0,1\ \%].$$

Der Differenzschlupfwert sollte grundsätzlich gefiltert werden, wobei die Zeitkonstante beispielsweise 0,25 s ist. Im Falle eines ABS-Eingriffes sollte jedoch keine Filterung erfolgen, da übermäßig große Differenzschlupfwerte während eines ABS-Eingriffes die Werte nach dem ABS-Eingriff beeinflussen würden.

Schlupfregler

Dem Schlupfregler werden folgende Größen als Eingangsgrößen zugeführt:

- kompensierter Differenzschlupf [0,1 %];
- Kurvenverhältnis [%];
- Signal, das anzeigt, daß das Radstand-Spurverhältnis gelernt worden ist.

Der Differenzschlupfregler liefert als Ausgangssignal einen gewünschten Vorderachsdruck $p_{VA}$ bzw. ein diesem gewünschten Vorderachsdruck entsprechendes Steuersignal für das ABS-Ventil der Vorderachse.
Der Schlupfregler ist ein reiner Integralregler (I-Regler). Das Rückkopplungssignal für den Schlupfregler ist der kompensierte Differenzschlupf $\Delta s$ [0,1 %].
Das Steuersignal bzw. die Stellgröße des Reglers ist das Verhältnis zwischen dem Vorderachsbremsdruck und dem Anhängerbremsdruck, d.h. dem vom Fahrer angeforderten Hinterachsbremsdruck in [0,1%].

$$Steuersignal = \frac{p_{VA}}{p_{HA}}\ [0,1\ \%].$$

Ein Steuersignal von 1000 bedeutet, daß der Vorderachsbremsdruck $p_{VA}$ und der Hinterachsbremsdruck $p_{HA}$ gleich groß sind.
Die Verstärkung des I-Terms, die das Steuersignal selbst ist, sollte

$$\frac{30\ \%/s}{\%}$$

sein.
Das bedeutet, daß im Falle eines Differenzschlupfes von +1 % das Steuersignal, d.h. das Verhältnis zwischen dem gewünschten Vorderachsbremsdruck $p_{VA}$ und dem gewünschten Hinterachsbremsdruck $p_{HA}$ eine Anstiegsrate von 30 %/s hat.
Der Regler sollte ein Toleranzband von 1 % haben. Das heißt, wenn der Differenzschlupf im Intervall [-1 %, +1 %] liegt, was Differenzschlupfwerten von -10...+10 entspricht, sollte die Verstärkung gelöscht werden, d.h. das Steuersignal sollte nicht verändert werden.

Initialisierung des Reglers

Nach einer Betätigung des EBS-Systems sollte das Steuersignal (I-Term) initialisiert werden, und zwar mit einem vorgegebenen Verhältnis von 1:1, was einem "Startwert" von 1000 entspricht.
Dieser Startwert kann jedoch während mehrerer Bremsbetätigungen angepaßt werden. Die optimale Bremskraftverteilung hängt von den geometrischen Abmessungen des Anhängers und von der horizontalen und vertikalen Lage des Schwerpunktes ab, welcher lastabhängig ist. Keine dieser Eigenschaften ändert sich schnell von einem Moment zum anderen. Es wird daher angenommen, daß sich der Lastzustand ausschließlich zwischen einem ausgeschalteten Zustand und einem eingeschalteten Zustand ändern kann oder im Stillstand des Fahrzeuges in eingeschaltetem Zustand, wenn dieser Zustand nicht länger als 5 min andauert.

Es sollte eine Speichervariable zur Speicherung des Initialisierungswertes des Steuersignales vorgesehen sein. Der Vorgabewert (default value) nach einem "Reset" sollte 1000 sein. Er sollte durch das Steuersignal überschrieben werden, wenn die folgenden Bedingungen erfüllt sind:

a) die Radgeschwindigkeiten sind durch eine Raddurchmesserkalibrierung modifiziert;
b) die Raddurchmesserkalibrierung wurde mindestens einmal seit dem Einschalten beendet;
c) EBS und Schlupfregelung sind aktiv;
d) bei der momentanen Bremsbetätigung ist kein ABS-Eingriff erfolgt;
e) der Differenzschlupf lag ständig zwischen -1 %...+1 % in den letzten 0,5 s;
f) das Kurvenverhältnis ist kleiner als 3 %.

Der Initialisierungswert sollte auf dem Vorgabewert (default value) von 1000 nach einem 5-minütigem Fahrzeugstillstand zurückgesetzt werden.

Sicherheitslevel

Die Bremsanlage überwacht, ob die notwendigen Bedingungen für eine vollständige Funktion vorliegen. Es gibt folgende notwendige Bedingungen:

- vier Raddrehzahlsignale vorhanden;
- Steuerdrucksignal vorhanden;
- die Regelung des Hinterachsbremsdruckes ist verfügbar.

Folgende Sicherheitslevel werden benötigt:

- vollständige Funktion, wenn alles verfügbar ist;
- gleichmäßige Bremskraftverteilung, d.h. keine Schlupfregelung, wenn bei der Radsensierung eine Störung vorliegt;
- Steuerdruck wird zu den Ausgängen durchgesteuert, wenn eine Störung in der Hinterachsbremsdruckregelung vorliegt; in diesem Fall erfolgt an keiner der Achsen eine Druckregelung.

a) Regelung aus

Wenn im EBS-System eine Störung auftritt, steuert das ABS-Ventil den über die Steuerdruckleitung vorgegebenen Maximaldruck in die Vorderachsbremszylinder ein.

b) 1:1-Regelung

Bei einer Störung eines Raddrehzahlsensors oder wenn ein Raddrehzahlsensor nicht zuverlässig arbeitet, erfolgt eine "Umschaltung" in einen "Default"-Zustand, wenn das EBS-System nicht aktiv ist. In diesem Fall ist das Ausgangssignal, d.h. der Vorderachsbremsdruck $p_{VA}$ gleich dem Hinterachsbremsdruck $p_{HA}$.

c) Regelung aktiv

Der Vorderachsbremsdruck $p_{VA}$ sollte sein:

$$p_{VA} = p_{HA} \cong \frac{Steuersignal}{1000}.$$

Das Steuersignal sollte in jedem Zyklus berechnet werden. Bei einem EBS-Eingriff sollte der "Default-Zustand" eingenommen werden (nur bei einer 4S3M-Anordnung).

d) Regelung eingefroren

Dieser Zustand entspricht im wesentlichen dem Aktiv-Zustand, jedoch wird das Steuersignal nicht verändert. Die Bremskraftverteilung ist somit "eingefroren".

Vom "Aktiv-Zustand" wird in den "eingefrorenen"-Zustand übergegangen, wenn eine der folgenden Bedingungen erfüllt ist:

- kein ABS-Flag-Clear (ABS-Aktivität und die folgenden 5 s ausgefallen);
- Kurvenverhältnis > untere Grenze (wenn das Radstand-Spurverhältnis nicht gelernt wurde);
- Kurvenverhältnis > obere Grenze (wenn das Radstand-Spurverhältnis gelernt wurde).

**Patentansprüche**

1. Bremsanlage für Nutzfahrzeuganhänger, die eine lenkbare Vorderachse aufweisen, mit:

Vorderachsbremszylindern (18, 19), Hinterachsbremszylindern (20, 21), Raddrehzahlsensoren (5-8), einem EBS-Modul (13) und einem ABS-Ventil (32), wobei das EBS-Modul (13) den Hinterachsbremszylindem (20, 21) zugeordnet ist zur Bremsdruckeinsteuerung in die Hinterachszylinder, ein elektrischer Steuerausgang des EBS-Moduls (13) mit einem elektrischen Steuereingang des ABS-Ventils (32) verbunden ist, und wobei die Raddrehzahlsensoren (5-8) an das EBS-Modul (13) angeschlossen sind, **dadurch gekennzeichnet, dass** ein einziges ABS-Ventil (32) beiden Vorderachsbremszylindem (18, 19) gemeinsam zugeordnet und zur Bremsdruckeinsteuerung in die Vorderachsbremszylinder (18, 19) vorgesehen ist, dass das EBS-Modul (13) in Abhängigkeit von Signalen der Raddrehzahlsensoren (5-8) ein Differenzschlupfsignal ($\Delta$s) entsprechend dem Differenzschlupf zwischen der Vorderachse und der Hinterachse ermittelt und dass das Differenzschlupfsignal ($\Delta$s) das ABS-Ventil (32) ansteuert.

2. Bremsanlage nach Anspruch 1, **dadurch gekennzeichnet, daß** das EBS-Modul (13) zur Ansteuerung des ABS-Ventils (32) einen Soll-Vorderachsbremsdruck ($p_{VA}$) ermittelt, in Abhängigkeit von einem vom Fahrer über die pneumatische Steuerleitung (38) vorgegebenen Steuerdruck bzw. des momentan eingesteuerten Hinterachsbremsdrucks ($p_{VA}$) und des momentanen Differenzschlupfs ($\Delta$s).

3. Bremsanlage nach einem der Ansprüche 1 oder 2, **dadurch gekennzeichnet, daß** das ABS-Ventil (32) bzw. der Soll-Bremsdruck ($p_{VA}$) der Vorderachse so geregelt werden, daß an der Vorderachse und an der Hinterachse der gleiche Schlupf auftritt bzw. daß der Differenzschlupf ($\Delta$s) in einem vorgegebenen zulässigen Wertebereich gehalten wird.

4. Bremsanlage nach einem der Ansprüche 1 bis 3, **dadurch gekennzeichnet, daß** der Differenzschlupf ($\Delta$s) aus einer mittleren Vorderachsgeschwindigkeit ($v_{VA}$) und einer Vorderachsreferenzgeschwindigkeit ($v_{VA,\ Ref}$) ermittelt wird, gemäß der Formel:

$$\Delta s = \frac{v_{VA} - v_{VA,\ Ref}}{v_{VA,\ Ref}} = \frac{v_{VA}}{v_{VA,\ Ref}} - 1$$

wobei

$\Delta$s - Differenzschlupf
$v_{VA}$ - Vorderachsgeschwindigkeit
$v_{VA,Ref}$ - Vorderachsreferenzgeschwindigkeit

5. Bremsanlage nach Anspruch 4, **dadurch gekennzeichnet, daß** die Vorderachsreferenzgeschwindigkeit ($v_{VA,\ Ref}$) aus einer mittleren Hinterachsgeschwindigkeit ($v_{HA}$), der Geschwindigkeitsdifferenz der Hinterräder ($\Delta v_{HA}$) und dem Radstand-Spurverhältnis ($\Phi$) des Anhängerfahrzeuges ermittelt wird, gemäß folgender Formel:

$$v_{VA,Ref} = \sqrt{v_{HA}^2 + (\Delta v_{HA} \bullet \phi)^2}$$

wobei

$v_{HA}$ - Hinterachsgeschwindigkeit
$\Delta v_{HA}$ - Geschwindigkeitdifferenz der Hinterräder
$\Phi$ - Radstand-Spurverhältnis

6. Bremsanlage nach Anspruch 5, **dadurch gekennzeichnet, daß** das Radstand-Spurverhältnis ($\Phi$) des Anhänger-fahrzeuges aus der mittleren Vorderachsgeschwindigkeit ($v_{VA}$), der mittleren Hinterachsgeschwindigkeit ($V_{HA}$), der Geschwindigkeitsdifferenz der Hinterräder ($\Delta v_{HA}$) ermittelt wird, gemäß folgender Formel:

$$\phi = \frac{\sqrt{v_{VA}^2 - v_{HA}^2}}{\Delta v_{HA}}$$

7. Bremsanlage nach Anspruch 6, **dadurch gekennzeichnet,**
   **daß** für das Radstand-Spurverhältnis ($\Phi$) des Anhängerfahrzeuges ein Anfangswert von $\Phi = 2,5$ vorgegeben ist.

8. Bremsanlage nach einem der Ansprüche 1 bis 7, **dadurch gekennzeichnet,**
   **daß** das ABS-Ventil (32) einen mit einer pneumatischen Steuerleitung (38) verbundenen Steuereingang (36) aufweist, und daß bei einer Störung des EBS-Moduls (13) das ABS-Ventil (32) einen vom Fahrer über die pneumatische Steuerleitung (38) vorgegebenen Bremsdruck in die Vorderachsbremszylinder (18, 19) einsteuert.

9. Bremsanlage nach einem der Ansprüche 1 bis 8, **dadurch gekennzeichnet,**
   **daß** das ABS-Ventil (32) bei einer Störung eines oder mehrerer Raddrehzahlsensoren (5-8) so angesteuert ist, daß der Vorderachsbremsdruck ($p_{VA}$) gleich dem durch das EBS-Modul (13) eingesteuerten Hinterachsbremsdruck ($p_{VA}$) ist.

**Claims**

1. Braking system for trailers of utility vehicles, said trailers having a steered front axle, with:

   front axle brake cylinders (18, 19), rear axle brake cylinders (20, 21), wheel speed sensors (5-8), an EBS module (13) and an ABS valve (32), wherein the EBS module (13) is assigned to the rear axle brake cylinders (20, 21) to control the brake pressure into the rear axle brake cylinders, wherein an electric control output of the EBS module (13) is connected to an electric control input of the ABS valve (32),
   and wherein the wheel speed sensors (5-8) are connected to the EBS module (13), **characterised in that** a single ABS valve (32) is jointly assigned to the two front axle brake cylinders (18, 19) and provided for controlling the brake pressure into the front axle brake cylinders (18, 19), **in that** the EBS module (13) detects, in dependence on signals of the wheel speed sensors (5-8), a differential slip signal ($\Delta s$) corresponding to the differential slip between the front axle and the rear axle, and **in that** the differential slip signal ($\Delta s$) drives the ABS valve (32).

2. Braking system according to claim 1, **characterised in that**, in order to drive the ABS valve (32), the EBS module (13) determines a set front axle brake pressure ($p_{VA}$) in dependence on a control pressure preset by the driver via the pneumatic control line (38) or on the currently controlled rear axle brake pressure ($p_{VA}$) and the current differential slip ($\Delta s$).

3. Braking system according to claim 1 or 2, **characterised in that** the ABS valve (32) and/or the set brake pressure ($p_{VA}$) of the front axle are/is controlled such that the front axle and the rear axle have the same slip and/or the differential slip ($\Delta s$) is kept within a preset permissible range of values.

4. Braking system according to any of claims 1 to 3, **characterised in that** the differential slip ($\Delta$s) is determined from a mean front axle speed ($v_{VA}$) and a front axle reference speed ($v_{VA,\ Ref}$) in accordance with the formula:

$$\Delta s \;=\; \frac{v_{VA} - v_{VA,\ Ref}}{v_{VA,\ Ref}} = \frac{v_{VA}}{v_{VA,\ Ref}} - 1$$

wherein

$\Delta$s = differential slip
$v_{VA}$ = front axle speed
$v_{VA,\ Ref}$ = front axle reference speed.

5. Braking system according to claim 4, **characterised in that** the front axle reference speed ($v_{VA,\ Ref}$) is determined from a mean rear axle speed ($V_{HA}$), the speed differential of the rear wheels ($\Delta v_{HA}$) and the wheelbase-to-track ratio ($\Phi$) of the trailer in accordance with the following formula:

$$v_{VA,\ Ref} = \sqrt{v_{HA}^2 + (\Delta v_{HA} \cdot \Phi)^2}$$

wherein

$v_{HA}$ = rear axle speed
$\Delta v_{HA}$ = speed differential of rear wheels
$\Phi$ = wheelbase-to-track ratio.

6. Braking system according to claim 5, **characterised in that** the wheelbase-to-track ratio ($\Phi$) of the trailer is determined from the mean front axle speed ($v_{VA}$), the mean rear axle speed ($v_{HA}$) and the speed differential of the rear wheels ($\Delta v_{HA}$) in accordance with the following formula:

$$\Phi = \frac{\sqrt{v_{VA}^2 - v_{HA}^2}}{v_{HA}}$$

7. Braking system according to claim 6, **characterised in that** a starting value of $\Phi = 2.5$ is preset for the wheelbase-to-track ratio ($\Phi$) of the trailer.

8. Braking system according to any of claims 1 to 7, **characterised in that** the ABS valve (32) has a control input (36) connected to a pneumatic control line (38), and **in that** the ABS valve (32) controls a brake pressure into the front axle brake cylinders (18, 19) as preset by the driver via the pneumatic control line (38) if there is a malfunction of the EBS module (13).

9. Braking system according to any of claims 1 to 8, **characterised in that** the ABS valve (32) is, if there is a malfunction of one or more wheel speed sensors (5-8), driven such that the front axle brake pressure ($p_{VA}$) is equal to the rear axle brake pressure ($p_{VA}$) controlled by the EBS module (13).

**Revendications**

1. Système de freinage de remorque de véhicule utilitaire qui ont un essieu avant directeur comprenant:

   des cylindres (18, 19), de freins d'essieux avant, des cylindres(20, 21) de freins d'essieux arrière, des capteurs (5-8) de vitesse de rotation de roue, un module EBS (13), et une vanne ABS (32), le module EBS (13) étant associé au cylindre (20,21) de frein d'essieux arrière pour commander la pression de freinage dans les cylindres d'essieux arrière, une sortie de commande du module EBS (13) étant reliée à une entrée électrique de commande de la vanne ABS (32),

   et dans lequel les capteurs (5-8) de vitesse de rotation de roues sont raccordés au module EBF (13) **caractérisé en ce qu'**une seule vanne ABS (32) est associée conjointement aux 2 cylindres (18-19) de freins d'essieux avant, et il est prévu pour commander la pression de freinage dans les cylindres (18-19) de freins d'essieux avant **en ce que** le module EBS 13 détermine en fonction des signaux des capteurs (5-8) de vitesse de rotation de roue, un signal ($\Delta$s) différentiel de patinage correspondant au patinage différentiel entre l'essieu avant et l'essieu arrière et **en ce que** le signal ($\Delta$s) différentiel de patinage commande la vanne ABS (32).

2. Système de freinage selon la revendication 1, **caractérisé en ce que** le module EBS détermine pour commander la vanne ABS 32, une pression ($p_{va}$) de consigne de frein d'essieux avant, en fonction d'une pression de commande prescrite par le conducteur par l'intermédiaire de la ligne conduite de pneumatique de commande ou de la pression ($p_{va}$) de freinage d'essieux arrière commandés instantanément, et du patinage ($\Delta$s) différentiel instantanné.

3. Système de freinage selon la revendication 1, **caractérisé en ce que** la vanne ABS (32), ou la pression ($p_{va}$) de freinage de consigne de l'essieu avant sont réglés de manière à ce qu'il se produise le même patinage sur l'essieu avant et l'essieu arrière ou de manière le patinage ($\Delta$s) différentiel dans une plage de valeur admissible prescrite.

4. Système de freinage selon les revendications 1 à 3, **caractérisé en ce que** le patinage ($\Delta$s) distanciel est déterminé à partir d'une vitesse ($V_{va}$) moyenne de l'essieu avant et d'une vitesse ($V_{va, Ref}$) de référence de l'essieu avant, suivant la formule,

$$\Delta s = \frac{v_{VA} - v_{VA, Ref}}{v_{VA, Ref}} = \frac{v_{VA}}{v_{VA, Ref}} - 1$$

   dans laquelle :

   $\Delta$s-patinage différentiel,
   $V_{va}$ -vitesse de l'essieu avant,
   $V_{va, Ref}$ -, vitesse de référence de l'essieu avant

5. Système de freinage selon la revendication 4, **caractérisée en ce que** la vitesse ($V_{va, Ref}$) de référence de l'essieu avant est déterminée à partir d'une vitesse ($V_{ha}$) moyenne d'essieux arrière, de la différence de vitesse des roues ($\Delta V_{ha}$) arrières et du rapport de pincement, d'empâtement ($\Phi$) du véhicule à remorque suivant la formule :

$$v_{VA, Ref} = \sqrt{v_{HA}^2 + (\Delta v_{HA} \cdot \Phi)^2}$$

   dans laquelle $V_{ha}$-vitesse de l'essieu arrière,
   ($\Delta V_{ha}$- différence de vitesse des roues arrières,
   $\Phi$- rapport de pincement d'empâtement.

6. Système de freinage selon la revendication 5, **caractérisée en ce que** le rapport de pincement d'empâtement ($\Phi$)

du véhicule à remorque est déterminé à partie de la vitesse ($V_{va}$) des moyennes d'essieux avant, de la vitesse (Vha) moyenne d'essieux arrières, de la différence de vitesse des roues ($\Delta V_{ha}$), suivant la formule:

$$\Phi = \frac{\sqrt{v_{VA}^2 - v_{HA}^2}}{v_{HA}}$$

7. Système de freinage selon la revendication 6, **caractérisé en ce qu'**il est prévu pour le rapport de pincement d'empâtement ($\Phi$) du véhicule à remorque une valeur initiale de ($\Phi$)= 2,5.

8. Système de freinage selon une des revendications 1 à 7, **caractérisé,**
**en ce que** la vanne ABS (32) a une entrée (36) de commande reliée à une conduite (38) de commande pneumatique, et en cas de panne du module EBS (13), la vanne ABS (32) établi une pression de freinage prescrite par le conducteur par l'intermédiaire de la conduite (38) de commande pneumatique dans les cylindres (18, 19) de freins d'essieux avant.

9. Système de freinage selon une des revendications 1 à 8, **caractérisé en ce que** la vanne ABS (32) est commandée si se produit une panne de l'un ou de plusieurs des capteurs 5 à 8 de vitesse de rotation des roues, de manière à ce que la pression ($p_{va}$) de freinage d'essieux avant soit égale à la pression ($p_{va}$) de freinage d'essieux arrière commandée par le module EBS-(13).

Fig. 1

Fig. 2